# FASCICULE DE BREVET EUROPEEN

(11) **EP 0 723 474 B1**
(45) Date de publication et mention de la délivrance du brevet: **08.07.1998**
(21) Numéro de dépôt: 95918650.3
(22) Date de dépôt: 27.04.1995
(51) Int. Cl.: B01D 46/04

(54) **INSTALLATION DE FILTRATION D'AIR AVEC RECYCLAGE DE L'AIR FILTRE**
LUFTFILTRATIONSANLAGE MIT RÜCKFÜHRUNG DER GEFILTERTEN LUFT
AIR FILTERING APPARATUS WITH FILTERED AIR RECIRCULATION

(30) Priorité: 28.04.1994 FR 9405404
(43) Date de publication de la demande: 31.07.1996
(73) Titulaire: SOCIETE CATTINAIR, 25150 Pont-de-Roide (FR)
(72) Inventeur: CATTIN, Gabriel, F-25150 Pont-de-Roide (FR)
(74) Mandataire: Phélip, Bruno
(86) Numéro de dépôt international: FR9500553
(87) Numéro de publication internationale: WO9529748

(56) Documents cités:
- EP-A- 0 343 061
- DE-A- 2 704 377
- DE-A- 2 831 167
- FR-A- 2 666 246
- US-A- 3 383 840

## Description

La présente invention concerne les installations de filtration d'air du type comportant des moyens pour permettre un recyclage de l'air filtré.

Le recyclage de l'air à l'intérieur des locaux permet de réaliser des économies du fait de la récupération des calories véhiculées par l'air filtré.

Ce recyclage impose une qualité de filtration régie par des normes qui, actuellement, imposent une limite maximum de 0,6 mg de poussières par m³ d'air recyclé.

Cette norme évolue dans le temps et, prochainement, cette limite supérieure sera au moins divisée par trois.

Toutes les installations de filtration du genre de celles décrites dans les documents DE-A-2704377 et 2831167, US-A-3383840, peuvent être utilisées avec un recyclage de l'air filtré, de même que celle décrite dans le document EP-A-0343061 de la demanderesse.

Cependant, toutes ces installations présentent comme inconvénient, lors de l'opération de nettoyage des manches, de provoquer une émission importante de poussières.

Il est connu, par le document FR-A-2666246 de la demamderesse, de réduire le taux de poussières dans l'air recyclé, lors des opérations de décolmatage des filtres. Cette réduction des taux de poussières est obtenue par le biais d'une évacuation vers l'extérieur de l'air filtré, lorsque cet air filtré est anormalement et temporairement chargé de poussières.

Le dernier document précité propose un dispositif du genre bipasse, constitué d'un volet logé dans les gaines de circulation d'air et en particulier d'un volet articulé autour d'un axe se situant au niveau de la tête d'une sorte de Té formé par la gaine d'arrivée d'air filtré et les deux gaines dont l'une assure le recyclage de l'air filtré et dont l'autre assure le rejet de l'air vers l'extérieur.

La présente invention propose une installation avec des moyens qui permettent de mieux contrôler la phase de rejet de l'air vers l'extérieur au moment de l'opération de nettoyage du média filtrant. Elle permet notamment d'offrir une grande sécurité en éliminant les risques de rejet accidentel de poussières dans l'air recyclé.

La présente invention propose également une installation qui permet de mieux contrôler les flux d'air destinés à être recyclés ou rejetés vers l'extérieur.

Selon l'invention, l'installation comprend, pour commander le bipasse, un dispositif de commande qui comporte des moyens de temporisation réglable servant à établir le cycle de bipasse et en particulier :
- une temporisation pour établir une durée t1 réglable par exemple de 0 à 3 secondes, qui correspond au temps prévu entre l'ordre de décolmatage et l'opération de décolmatage et durant lequel le bipasse est mis en oeuvre pour canaliser l'air filtré vers l'extérieur;
- une temporisation pour établir une durée t2 qui succède à t1 réglable par exemple de 6 à 10 secondes, qui correspond à un temps au terme duquel les moyens de bipassage sont à nouveau mis en oeuvre pour assurer le recyclage de l'air filtré.

Selon une autre disposition de l'invention, le dispositif de commande des moyens de bipassage comporte de plus, une temporisation permettant d'établir un intervalle de temps de durée t3 qui correspond à un temps minimum entre l'opération de décolmatage et le démarrage d'un nouveau cycle de bipassage.

Toujours selon l'invention, le dispositif de commande est mis en oeuvre au moyen d'un pressostat qui permet de contrôler l'encrassement des filtres, ou encore au moyen d'une minuterie qui peut être réglée en fonction du type de poussières à traiter.

Toujours selon l'invention, le dispositif de commande des moyens de bipassage peut également être mis en oeuvre lors de la mise en service de l'installation en réalisant, comme pour le décolmatage, un cycle de bipassage c'est-à-dire une ouverture des moyens de bipassage pour effectuer un rejet vers l'extérieur puis, grâce à une temporisation qui peut établir une durée correspondant à t1 + t2, pour effectuer le recyclage.

L'invention concerne également une installation dont les moyens de bipassage sont constitués de deux volets : un volet de commande du recyclage et un volet de commande du rejet extérieur, et elle comporte des moyens de commande desdits volets.

Cette particularité présente plusieurs avantages comme, par exemple, la possibilité de fermer simultanément les deux volets pour offrir une protection contre l'incendie jouant le rôle d'arrêt de ventilation, voire de coupe-feu. Elle permet également lors de l'opération de bipasse, de réaliser un décalage réglable en séquence et dans le temps, entre les ouvertures et fermetures des deux volets.

Selon l'invention, les volets peuvent être constitués par exemple de lames pivotantes, articulées sur un axe longitudinal médian et elles sont reliées entre elles, commandées simultanément ou indépendamment par un moyen quelconque.

Selon une disposition préférentielle, ces moyens de commande des volets sont constitués de vérins pneumatiques ou autres ; chaque vérin est commandé par une électrovanne dont la position repos correspond à la fermeture aussi bien des volets de rejet vers l'extérieur que des volets de recyclage de l'air.

L'invention sera encore détaillée à l'aide de la description suivante et des dessins annexés donnés à titre indicatif, et dans lesquels :
- la figure 1 est une vue partiel le schématique d'une installation de filtration avec recyclage, munie d'un système de décolmatage automatique des manches et du bipasse selon l'invention ;
- la figure 2 représente de façon schématique le bipasse à deux volets ;
- la figure 3 illustre les moyens de commande des volets ;
- la figure 4 illustre, par le biais de trois graphiques, en fonction du temps : - les phases de rejet vers l'extérieur et de recyclage, - la pression relevée par le pressostat et - le taux d'émission de poussières lors du décolmatage ;
- la figure 5 correspond à un exemple de relevé d'émission de poussières dans l'air recyclé lors d'une première période sans utilisation du système de bipasse et lors d'une deuxième période avec utilisation dudit système de bipasse, chaque période ayant une durée de l'ordre de une heure.

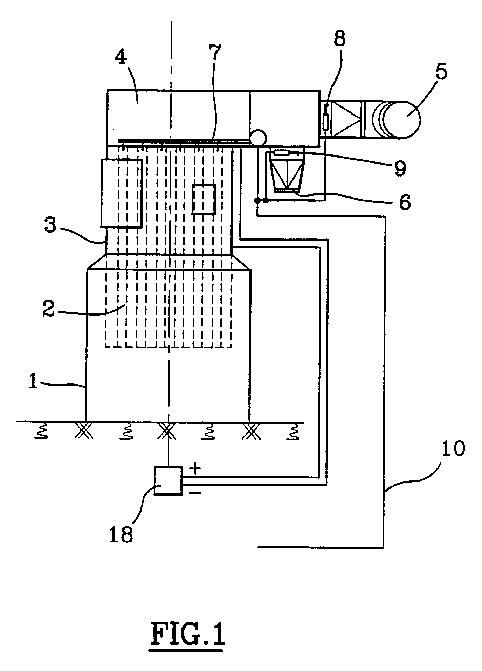

L'installation de filtration représentée figure 1 correspond à une installation du type de celle décrite dans le document FR-A-2 514 669 ou le document EP-A-0 343 061 précité. Cette installation comprend, de façon classique, une chambre inférieure cyclonique ou autre 1 dans laquelle arrivent à grande vitesse, les poussières et copeaux par exemple, portés par le flux d'air. Cet air est filtré dans des manches 2 rassemblées dans une car touche 3 qui surplombe la chambre 1. L'air filtré s'échappe au-dessus de la car touche dans la coiffe 4 et cet air filtré est ensuite canalisé soit par une gaine de recyclage 5 soit par une évacuation vers l'extérieur au moyen d'une gaine 6.

Cette installation présente la particularité, par rapport aux autres installations décrites dans les documents DE-A-2704377 et 2831167 ou US-A-3383840, de comporter un dispositif de décolmatage automatique constitué d'une ou plusieurs rampes 7 installées dans la coiffe 4 au-dessus des manches filtrantes 2. Chaque opération de décolmatage consiste en une injection d'air sous pression dans les manches 2, provoquant, par une sorte de contre-courant, un décollement de la poussière qui s'agglomère sur ces manches. L'injection d'air de décolmatage dure quelques dixièmes de seconde et cette opération provoque un léger passage de poussières à travers les manches au moment où les manches décolmatées reprennent leur fonction de filtration.

Cette émission de poussières se retrouve également dans les installations décrites dans les trois derniers documents cités.

Pour éviter de réintroduire ces poussières lors du recyclage par la gaine 5, il est prévu comme décrit dans le document FR-A-2 666 246 précité, de bipasser l'air filtré chargé de poussières pour le rejeter vers l'extérieur, au moyen de la gaine 6.

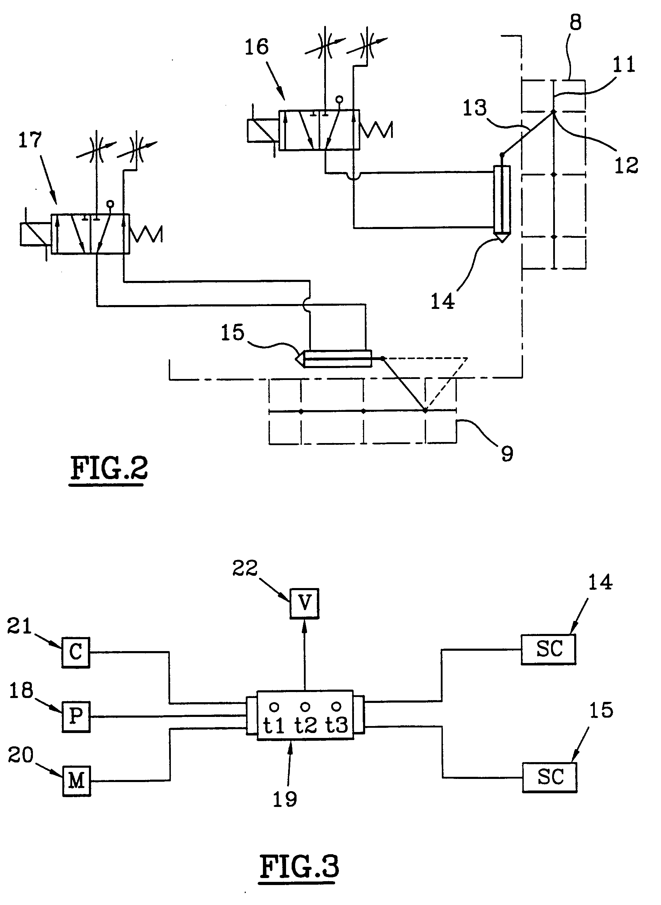

Mais pour réaliser ce bipassage, dans l'installation décrite figures 1 et 2, la gaine 5 est isolée de la coiffe 4 au moyen d'un volet 8 et la gaine 6 est séparée de la coiffe 4 au moyen d'un volet 9. Ces volets, détaillés de façon schématique figure 2, peuvent comporter des lames 11 pivotantes, articulées autour d'axes 12 qui sont disposés longitudinalement et dans le plan médian des lames 11. Ces volets sont par exemple réunis entre eux par une biellette, non représentée, ou par tout autre moyen, et sont actionnés simultanément au moyen d'une manivelle 13 qui est manoeuvrée par un système de commande constitué de vérins 14, 15 et d'électrovannes 16, 17, respectivement. Le volet 8 est manoeuvré par le vérin 14. Le volet 9 est manoeuvré par le vérin 15. Ces vérins 14 et 15 sont du type double effet, actionnés par exemple au moyen de l'air comprimé de la ligne 10. Ces vérins sont mis en oeuvre à travers des électrovannes. Le vérin 14 est actionné au moyen de l'électrovanne 16. Le vérin 15 est actionné au moyen de l'électrovanne 17.

Ces électrovannes 16 et 17 ont une position repos, comme représenté figure 2, qui positionnent les vérins 14 et 15 respectivement, de façon à fermer les volets 8 et 9. Le bras de levier du volet 9 est également représenté en position ouverte en traits mixtes fins.

Cette position ouverte du volet 9 ou du volet 8, est réalisée par une activation des électrovannes 17 et 16 respectivement.

Le cycle de décolmatage peut être déclenché lorsque le niveau d'encrassement des manches filtrantes 2 atteint un seuil préétabli réglable. Ce seuil peut être contrôlé au moyen d'un pressostat 18, comme représenté figure 1, qui relève les pressions en amont et en aval desdites manches.

Ce pressostat 18 donne un signal qui peut être exploité à travers un dispositif de commande 19 intégré ou non dans le pressostat, figure 3, pour réaliser l'ouverture et/ou la fermeture des volets 8 et 9. Ce dispositif de commande 19 peut également recevoir un signal d'une minuterie 20 par exemple pour déclencher les opérations de décolmatage et l'ouverture et/ou la fermeture des volets 8 et 9. Ce dispositif de commande 19 peut également être utilisé pour ouvrir et/ou fermer les volets 8 et 9 en fonction de besoins particuliers comme par exemple au moment de la mise en service de l'installation de filtration par le commutateur 21, ou comme par exemple lors d'une alarme en cas de défaut de filtration. Dans ces cas, le volet 9 est ouvert pour rejeter l'air vers l'extérieur du fait de la présence possible de poussières dans l'air filtré.

Ce dispositif de commande 19 agit également sur une des vannes ou électrovannes 22 chargées de mettre en service le système de décolmatage comme par exemple au moins l'une des rampes 7 de décolmatage.

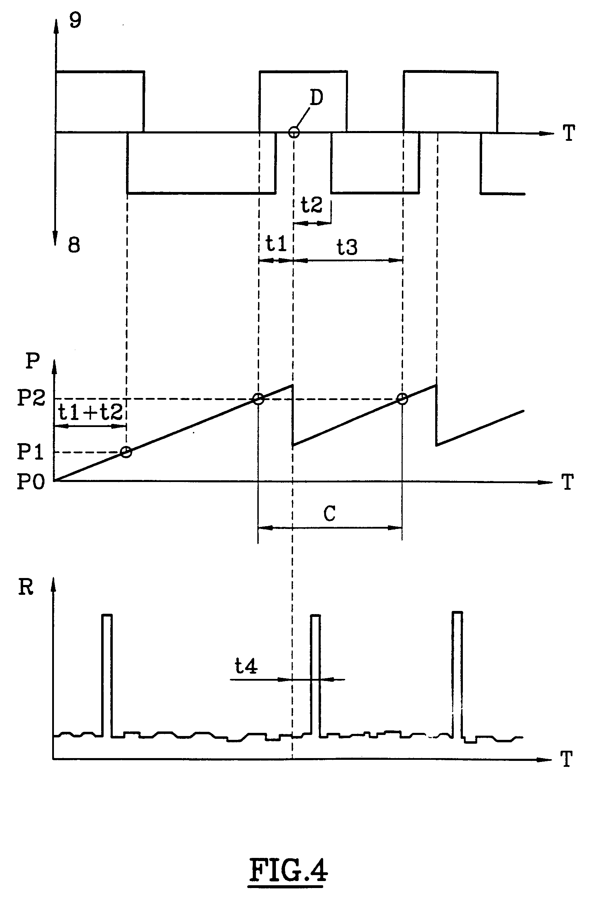

La figure 4 représente graphiquement, les cycles d'ouverture et de fermeture des volets 9 et 8, c'est-à-dire du volet de rejet vers l'extérieur et du volet de recyclage vers l'intérieur, en fonction du temps.

Ce cycle est mis en parallèle d'une part, avec l'évolution des informations relevées par le pressostat en fonction du temps également, et, d'autre part avec le taux de poussières que l'on peut trouver dans l'air recyclé.

L'origine sur ces graphiques correspond à l'ordre de démarrage de l'installation. On remarque que cet ordre de démarrage en traîne une ouverture du volet 9 c'est-à-dire du volet de rejet de l'air filtré vers l'extérieur. Avant la fermeture du volet 9, on remarque l'ouverture du volet 8 qui permet le recyclage de l'air filtré.

Au démarrage de l'installation, le pressostat part d'une valeur initiale P0 et la différence de pression s'accroît régulièrement pour atteindre une valeur P1 dans un temps t1 + t2. A partir de cette valeur P1, le passage des poussières à travers les manches filtrantes 2 devient négligeable du fait de l'autofiltration assurée par le colmatage de ces manches. Arrivé à ce stade, le volet de recyclage 8 est ouvert sur ordre du dispositif de commande 19 et le volet 9 de rejet vers l'extérieur est fermé sur ordre également du dispositif de commande 19.

La différence de pression continue à monter et atteint un seuil P2 qui est prédéterminé en fonction de l'installation et en particulier de la nature ou de la quantité des poussières à filtrer. Dès que ce seuil P2 est atteint, le pressostat 18 donne un signal au dispositif de commande 19, lequel dispositif de commande met en oeuvre une première temporisation du genre minuterie, de façon à établir un temps de durée t1 au terme duquel s'effectue l'opération de décolmatage D proprement dite par activation du système de décolmatage 22. le dispositif de commande déclenche également, avant l'opération de décolmatage proprement dit, un cycle qui commence par l'ouverture du volet 9 de rejet vers l'extérieur et ensuite la fermeture du volet 8 de recyclage.

Ce temps t1 est de préférence réglable ; il est de l'ordre de 0 à 3 secondes par exemple pour permettre aux moyens de bipassage de se mettre dans la position active correspondante.

Simultanément à l'ordre de décolmatage, le dispositif de commande 19 met en oeuvre une seconde temporisation permettant d'établir un temps d'une durée t2. Ce temps t2 est choisi pour garantir une évacuation totale vers l'extérieur, des poussières résiduelles dues à l'opération de décolmatage. A la fin de ce temps t2, le dispositif de commande 19 établit un nouveau cycle. Le volet 8 de recyclage s'ouvre à la fin de cette temporisation et, après cette ouverture, le volet 9 de rejet vers l'extérieur se ferme.

Le temps t2 est choisi en fonction du temps t4 observé sur l'installation. Ce temps t4 correspond au temps qui s'écoule entre l'opération de décolmatage et l'arrivée des poussières résultantes au niveau de la sortie de recyclage. Ce temps t4 peut être par exemple de l'ordre de 2 à 4 secondes pour une installation du type de celle décrite figure 1. De ce fait, t2 est de l'ordre de 6 à 10 secondes par exemple pour être sûr de recycler l'air après et seulement après le pic de poussières observé dans l'air filtré.

L'opération de décolmatage déclenche également, comme représenté figure 4, une temporisation permettant d'établir une durée t3 (t3 > t2) qui correspond à un intervalle de temps minimum avant le démarrage du cycle de décolmatage C suivant. Ce temps t3 est par exemple de 30 secondes à 1 minute.

La temporisation t1 + t3 correspond au minimum d'espace entre les cycles de décolmatage C. Sa durée est établie en fonction des matériaux à filtrer et de leur quantité.

Comme représenté figure 4, un nouveau cycle de décolmatage est initié au terme de la durée t3 si le seuil P2 est atteint par le pressostat 18. Ce seuil déclenche le cycle d'ouverture et de fermeture des volets 8 et 9 ainsi que le décolmatage proprement dit par action sur le système de décolmatage 22.

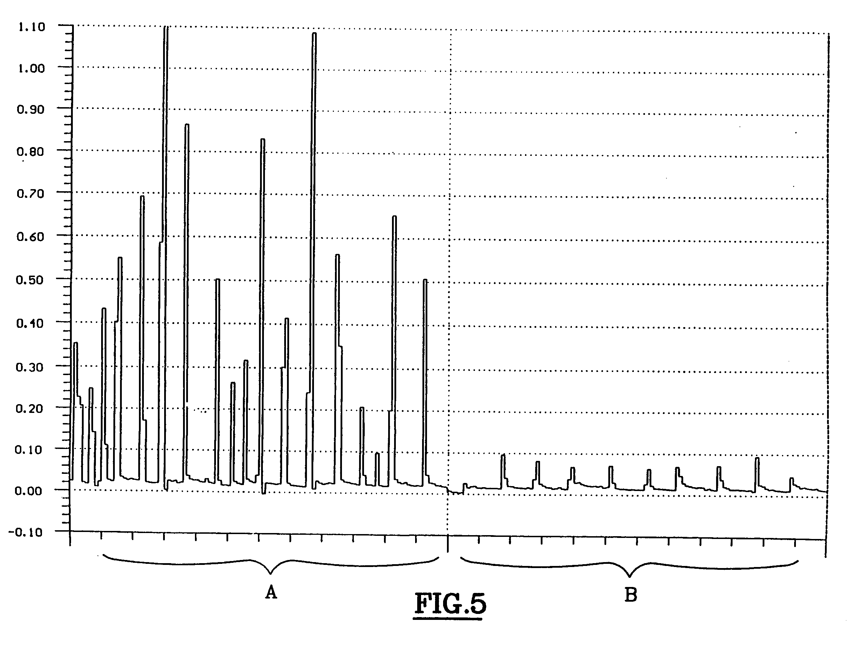

La figure 5 illustre par exemple un relevé d'émission de poussières dans l'air à la sortie de l'installation de filtration. Ce diagramme comporte en abscisse le temps divisé en deux périodes : la première période A correspond à un relevé d'émission de poussières à la sortie de l'installation de filtration avec, dans cette période, plusieurs opérations de décolmatage des manches filtrantes sans mise en service des moyens de bipassage, et la seconde période B correspond à un relevé au cours duquel ont été effectuées également plusieurs opérations de décolmatage des manches filtrantes avec mise en service des moyens de bipassage.

Le diagramme comporte en ordonnées l'émission de poussières indiquée en mg/m3.

Ces mesures d'émission de poussières sont par exemple effectuées au moyen d'un appareil type DT770, sur la base des principes de triboélectricité.

Dans la première période A, dont la durée est d'environ 1 heure, on remarque une multitude de pics d'émission de poussières qui succèdent à chacune des opérations de décolmatage des manches.

Ce type d'émission est observable sur tous types d'installations, qu'elles soient équipées d'un système de décolmatage automatique par injection d'air comprimé ou par injection d'air filtré à contrecourant comme dans les différents documents précités.

La période B du diagramme, dont la durée est d'environ 1 heure également, montre de la même façon une multitude de pics dont aucun ne dépasse une émission de 0,10 mg de poussières par mètre cube d'air filtré.

Ce résultat est obtenu au moyen du système de bipasse qui permet, lors de chaque opération de nettoyage des manches, de bipasser l'air filtré vers l'extérieur au lieu de le recycler.

Ce relevé, effectué sur l'air recyclé, montre l'importance de la réduction d'émission de poussières obtenu par les moyens décrits ci-avant.

## Revendications

1. Installation de filtration d'air, du type comportant des moyens de décolmatage de la partie filtrante, et de recyclage de l'air filtré, et des moyens permettant, lors de l'opération de décolmatage, de bipasser l'air filtré vers l'extérieur, caractérisée en ce qu'elle comprend un dispositif (19) de commande desdits moyens de bipassage qui comporte des moyens de temporisation réglable établissant le cycle de bipassage et éventuellement, de décolmatage :
- une première temporisation pour établir une durée t1, églable par exemple de 0 à 3 secondes, qui correspond au temps prévu entre l'ordre de décolmatage et l'opération de décolmatage, durant lequel temps les moyens de bipassage sont mis en oeuvre pour canaliser l'air filtré vers l'extérieur ;
- une seconde temporisation pour établir une durée t2 lancée simultanément à l'opération de décolmatage, succédant à t1, réglable par exemple de 6 à 10 secondes, et qui correspond à un temps au terme duquel les moyens de bipassage sont à nouveau mis en oeuvre pour assurer le recyclage de l'air filtré.

2. Installation de filtration selon la revendication 1, caractérisée en ce que le dispositif de commande (19) comporte une temporisation pour établir une durée t3 qui correspond à un temps minimum choisi en fonction des matériaux à filtrer, lequel temps est établi entre l'opération de décolmatage et le démarrage d'un nouveau cycle de bipassage et éventuellement de décolmatage.

3. Installation de filtration selon l'une quelconque des revendications 1 ou 2, caractérisée en ce que le dispositif de commande (19) est activé au moyen d'un pressostat (18) qui contrôle l'encrassement de la partie filtrante.

4. Installation de filtration selon l'une quelconque des revendications 1 ou 2, caractérisée en ce que le dispositif de commande (19) est activé au moyen d'une minuterie (20) réglée en fonction du matériau à filtrer.

5. Installation de filtration selon l'une quelconque des revendications 1 ou 2, caractérisée en ce que le dispositif de commande (19) est activé par les moyens (21) de mise en service de l'installation, lequel dispositif de commande active les moyens de bipassage pour effectuer un rejet de l'air vers l'extérieur pendant un temps qui correspond par exemple à la temporisation t1 + t2.

6. Installation de filtration selon l'une quelconque des revendications 1 ou 2, caractérisée en ce que le système de commande (19) est activé par une alarme en cas de défaut de filtration ou de fonctionnement, lequel dispositif de commande active les moyens de bipassage pour effectuer un rejet de l'air vers l'extérieur.

7. Installation de filtration selon l'une quelconque des revendications 1 à 6, caractérisée en ce que les moyens de bipassage sont constitués de deux volets : - un volet (8) en commande du recyclage, et - un volet (9) en commande du rejet extérieur, et des moyens de commande desdits volets, constitués de vérins (14, 15) et d'électrovannes (16, 17).

8. Installation de filtration selon la revendication 7, caractérisée en ce que chaque système de commande (14 ou 15) a une position de repos qui correspond à la fermeture aussi bien des volets de rejet vers l'extérieur que des volets de recyclage de l'air filtré.

## Claims

1. Air-filtering apparatus, of the type including means for unclogging the filtering part and recirculating the filtered air, and means allowing the filtered air to be bypassed to the outside during the unclogging operation, the apparatus being characterized in that it comprises a device (19) for controlling the said bypass means which includes adjustable time-delay means which set up the bypass, and possibly the unclogging, cycle:
- a first time delay for establishing a duration t1, which can be adjusted for example from 0 to 3 seconds, which corresponds to the time provided between the unclog order and the unclogging operation, during which time the bypass means are put into operation to route the filtered air to the outside;
- a second time delay for establishing a duration t2 initiated at the same time as the unclogging operation, succeeding t1, which can be adjusted for example from 6 to 10 seconds and which corresponds to a time at the end of which the bypass means are put into operation again in order to recirculate the filtered air.

2. Filtering apparatus according to Claim 1, characterized in that the control device (19) includes a time delay for establishing a duration t3 which corresponds to a minimum time chosen as a function of the materials to be filtered, which time is established between the unclogging operation and the beginning of a new bypass, and possibly unclogging, cycle.

3. Filtering apparatus according to either of Claims 1 and 2, characterized in that the control device (19) is activated by means of a pressure switch (18) which monitors the soiling of the filtering part.

4. Filtering apparatus according to either one of Claims 1 and 2, characterized in that the control device (19) is activated by means of a timer (20) which is adjusted depending on the material to be filtered.

5. Filtering apparatus according to either one of Claims 1 and 2, characterized in that the control device (19) is activated by the means (21) for switching the apparatus on, which control device activates the bypass means in order to discharge air to the outside for a time which corresponds, for example, to the time delay t1 + t2.

6. Filtering apparatus according to either one of Claims 1 and 2, characterized in that the control system (19) is activated by an alarm in the event of defect in filtration or in operation, which control device activates the bypass means in order to discharge air to the outside.

7. Filtering apparatus according to any one of Claims 1 to 6, characterized in that the bypass means consist of two flaps:- a flap (8) in control of the recirculation, and - a flap (9) in control of discharge to the outside, and of the means for controlling the said flaps, which consist of cylinder actuators (14, 15) and of solenoid valves (16, 17).

8. Filtering apparatus according to Claim 7, characterized in that each control system (14 or 15) has a position of rest which corresponds to the closure both of the flaps for discharge to the outside and of the flaps for recirculating the filtered air.

## Patentansprüche

1. Luftfiltereinrichtung der Bauart, die Mittel zur Beseitigung von Verstopfungen des Filterteils und Rückfuhren der gefilterten Luft sowie Mittel umfaßt, welche bei der Beseitigung der Verstopfungen ein Umleiten der gefilterten Luft nach außen gestattet,
**dadurch gekennzeichnet,**
daß sie eine Einrichtung (19) zur Steuerung der Umleitmittel umfaßt, welche steuerbare Verzögerungsmittel einschließt, welche den Zyklus des Umleitens und gegebenenfalls des Beseitigens von Verstopfungen festsetzen:
- eine erste Verzögerung, um eine Teildauer t1 festzusetzen, die beispielsweise zwischen 0 bis 3 Sekunden einstellbar ist, welche der Zeit entspricht, die zwischen dem Befehl zum Beseitigen der Verstopfung und dem betriebsmäßigen Beseitigen der Verstopfungen vorgesehen ist, während der die Mittel zum Umleiten der gefilterten Luft nach außen im Betrieb gesetzt sind,
- eine zweite Verzögerung, um die Zeitdauer t2 festzusetzen, die gleichzeitig mit dem betriebsmäßigen Beseitigen der Verstopfungen in Gang gesetzt wird, das auf t1 folgt, beispielsweise auf 6 bis 10 Sekunden einstellbar ist und die einer Zeit entspricht, an deren Ende die Umleitmittel erneut in Gang gesetzt sind, um das Rückführen der gefilterten Luft zu gewährleisten.

2. Filtereinrichtung nach Anspruch 1,
**dadurch gekennzeichnet,**
daß die Steuereinrichtung (19) eine Verzögerung umfaßt, um eine Zeitdauer t3 festzusetzen, welche einer kleinsten Zeit entspricht, die abhängig von den zu filternden Stoffen ausgewählt ist und wobei die Zeit zwischen dem betriebsmäßigen Beseitigen der Verstopfungen und dem Start eines keinen Zyklus des Umleitens und gegebenenfalls des Beseitigens von Verstopfungen festgesetzt ist.

3. Filtereinrichtung nach Anspruch 1 oder 2,
**dadurch gekennzeichnet,**
daß die Steuereinrichtung (19) mittels eines Druckreglers (18) aktiviert ist, welcher die Verstopfung des Filterteils steuert.

4. Filtereinrichtung nach einem der Ansprüche 1 oder 2,
**dadurch gekennzeichnet,**
daß die Steuereinrichtung (19) mittels einer Schaltuhr (20) gesteuert wird, die in Abhängigkeit von dem zu filternden Stoff geregelt wird.

5. Filtereinrichtung nach einem der Ansprüche 1 oder 2,
**dadurch gekennzeichnet,**
daß die Steuereinrichtung (19) durch Mittel (21) aktiviert wird, welche die Einrichtung in Gang setzen, wobei die Steuereinrichtung (19) die Mittel zum Umleiten aktiviert, um einen Ausstoß der Luft nach außen während einer Zeit zu bewirken, die beispielsweise der Verzögerungszeit t1 + t2 entspricht.

6. Filtereinrichtung nach einem der Ansprüche 1 oder 2,
**dadurch gekennzeichnet,**
daß die Steuereinrichtung (19) durch einen Alarm im Falle einer Filtrations- oder Funktionsstörung aktiviert ist, wobei die Steuereinrichtung die Mittel zum Umleiten aktiviert, um einen Ausstoß nach außen zu bewirken.

7. Filtereinrichtung nach einem der Ansprüche 1 bis 6,
**dadurch gekennzeichnet,**
daß die Mittel zum Umleiten aus zwei Klappen:
- einer Klappe (8) gesteuert von dem Rückführen und
- einer Klappe (9) gesteuert von dem Ausstoß nach außen, sowie Mitteln zum Steuern der Klappen bestehen, welche von Hubzylindern (14,15) und elektrisch betätigten Schiebern (16,17) gebildet sind.

8. Filtereinrichtung nach Anspruch 7,
**dadurch gekennzeichnet,**
daß jede Steuereinrichtung (14 oder 15) eine Ruhestellung hat, welche dem Schließen sowohl der Klappe des Ausstoßes nach außen als auch der Klappe des Rückführens der gefilterten Luft entspricht.
